# EUROPÄISCHE PATENTSCHRIFT

(11) **EP 2 753 565 B1**
(45) Veröffentlichungstag und Bekanntmachung des Hinweises auf die Patenterteilung: **08.07.2015**
(21) Anmeldenummer: 12756187.6
(22) Anmeldetag: 06.09.2012
(51) Int. Cl.: B66C 1/02, B66C 15/06, B66F 17/00, B66F 9/075, H04W 24/04

(54) **VERFAHREN ZUR ÜBERWACHUNG DES BETRIEBSZUSTANDES EINER VORRICHTUNG SOWIE VORRICHTUNG UND SYSTEM HIERZU**
METHOD FOR MONITORING AN OPERATING STATE OF A DEVICE AND CORRESPONDING DEVICE AND SYSTEM
PROCÉDÉ DE SURVEILLANCE DE L'ÉTAT DE FONCTIONNEMENT D'UN DISPOSITIF AINSI QUE DISPOSITIF ET SYSTÈME CORRESPONDANTS

(30) Priorität: 07.09.2011 DE 102011082297
(43) Veröffentlichungstag der Anmeldung: 16.07.2014
(73) Patentinhaber: J. Schmalz GmbH, 72293 Glatten (DE)
(72) Erfinder: KUOLT, Harald, 78586 Deilingen (DE)
(74) Vertreter: DREISS Patentanwälte PartG mbB
(86) Internationale Anmeldenummer: PCT/EP2012/067398
(87) Internationale Veröffentlichungsnummer: WO 2013/034634

(56) Entgegenhaltungen:
- EP-A1- 1 840 078
- EP-A1- 2 263 966
- WO-A1-2010/003636
- DE-A1-102006 025 002
- DE-A1-102008 052 812
- US-A1- 2004 102 869
- US-A1- 2008 174 076

## Beschreibung

Die Erfindung betrifft ein Verfahren zur Überwachung des Betriebszustandes einer Vorrichtung, sowie eine Vorrichtung zur Durchführung eines solchen Verfahrens und ferner ein System zur Überwachung des Betriebszustandes einer Vorrichtung.

In Betrieb von insbesondere mechanischen Vorrichtungen besteht das Bedürfnis, den aktuellen Betriebszustand der Vorrichtung detektieren zu können.

Im Zusammenhang mit der vorliegenden Erfindung können die genannten Betriebszustände z.B. bei Vorrichtungen mit gegeneinander beweglichen Bauteilen durch den aktuellen Abstand zweier beweglicher Bauteile voneinander beschrieben werden. Bei einer Unterdruckhandhabungseinrichtung können verschiedene Betriebszustände z.B. anhand von Druckwerten einer Unterdruckversorgung unterschieden werden. Ebenso kann ein Betriebszustand durch die Position eines Kolbens oder Stößels in einem Zylinder charakterisiert werden. Bei einer Greifvorrichtung kann beispielsweise zwischen einem Betriebszustand mit gegriffenem Werkstück und einem Betriebszustand ohne gegriffenes Werkstück unterschieden werden. Der Begriff des Betriebszustands ist daher weit auszulegen.

Um derartige Betriebszustände zu detektieren, sind im Stand der Technik verschiedene Verfahren bekannt. Diese erfordern meist eine Anordnung von Sensoren, wobei oftmals entsprechende Verkabelungen zur Signalübertragung verwendet werden. Meist ist für einen Sensor außerdem eine Energieversorgung mittels einer Betriebsspannungszuleitung oder einer eigenen Batterie nötig. Ferner weisen bekannte Anordnungen z.B. zur Detektion einer Bauteilposition Schaltmittel auf, beispielsweise in der Art eines Reedkontakt-Schalters oder eines Tastschalters. Solche Bauteile sind anfällig für Verschleiß und führen zu einer gewissen Komplexität der Detektionssysteme.

In der DE 10 2008 052 812 A1 ist eine Unterdruckhandhabungseinrichtung beschrieben, wobei an einem Bauteil dieser Einrichtung ein RFID-tag mit einem RFID-Chip und einer Antenne zur drahtlosen Signalübertragung angeordnet ist. Zwischen Antenne und RFID-Chip ist ein Schaltelement vorgesehen, so dass die Antenne von dem RFID-Chip getrennt werden kann und so das RFID-tag insgesamt funktionslos gemacht werden kann. Das Schaltelement wird beispielsweise durch Anliegen eines zu handhabenden Werkstückes an der Unterdruckhandhabungseinrichtung betätigt, wodurch z.B. die Verbindung zur Antenne hergestellt wird. Diese Maßnahmen haben den Zweck, dass überwacht werden kann, ob das mit dem RFID-tag versehene Bauteil bestimmungsgemäß in der Unterdruckhandhabungseinrichtung verbaut ist.

Der Erfindung liegt die Aufgabe zugrunde, auf einfache Weise eine zuverlässige und energieeffiziente Überwachung von Betriebszuständen einer Vorrichtung zu ermöglichen. Insbesondere sollten aufwändige Schalteranordnungen und Leitungssysteme zur Energieversorgung und/oder Datenübertragungen vermieden werden.

Diese Aufgabe wird durch ein Verfahren gemäß dem Anspruch 1, sowie durch eine Vorrichtung gemäß dem Anspruch 5 zur Durchführung des Verfahrens, und außerdem durch ein System nach Anspruch 8 gelöst.

Ein wesentlicher Aspekt der zugrundeliegenden erfinderischen Idee besteht darin, an der zu überwachenden Vorrichtung, beispielsweise an einem beweglichen Bauteil dieser Vorrichtung, einen Transponder zum Empfangen und Senden von elektromagnetischen Signalen (von und zu einer Basiseinrichtung) anzuordnen. Ein erster Schritt des erfindungsgemäßen Verfahrens ist insofern, dass ein an der zu überwachenden Vorrichtung angeordneter Transponder (mit einem Kommunikationsschaltkreis und einer Antenne) zur drahtlosen Signalübertragung von und zu einer Basiseinrichtung bereitgestellt wird. Der Betriebszustand der Vorrichtung wird dann dadurch überwachbar, dass die Signalübertragung von und/oder zu der Antenne (insbesondere zwischen Antenne und Basiseinrichtung) durch Annäherung eines Störobjektes gestört wird. Es findet jedoch keine Trennung von Antenne und Kommunikationsschaltkreis statt. Im entfernten Zustand des Störobjektes beeinflusst dieses die Signalübertragung nicht. So kann die Annäherung bzw. Entfernung des Störobjektes an bzw. von der Antenne detektiert werden. Dabei ist ein erster Betriebszustand der Vorrichtung einer beabstandeten Lage des Störobjektes (ungestörte Signalübertragung) und ein zweiter Betriebszustand der angenäherten Lage des Störobjektes (gestörte Signalübertragung) derart zugeordnet, dass über die Störung der Signalübertragung der Betriebszustand oder ein Übergang zwischen den Betriebszuständen detektiert werden kann.

Durch die erfindungsgemäßen Maßnahmen wird eine Detektion von Betriebszuständen der Vorrichtung, insbesondere eines Übergangs zwischen zwei Betriebszuständen, ermöglicht. Hierzu ist es lediglich erforderlich, an der Vorrichtung einen Transponder in der angesprochenen Art anzuordnen. Weitere Schalteinrichtungen, beispielsweise Unterbrecherschalter oder Anschlagschalter oder separate Näherungssensoren können eingespart werden. Die erfindungsgemäßen Maßnahmen lassen sich flexibel in nahezu jegliche Art von Vorrichtung integrieren, deren Betriebszustände über zumindest zwei verschiedene Positionen eines Störobjekts charakterisierbar sind (zum Beispiel die eingangs genannten Betriebszustände). Beispielhaft werden weiter unten Vorrichtungen beschrieben, bei denen das erfindungsgemäße Verfahren angewendet werden kann.

Grundsätzlich wird durch die Annäherung des Störobjekts die Signalübertragung beeinflusst. Die Störung der Signalübertragung kann z.B. dadurch erfolgen, dass die Sende-Reichweite des Transponders reduziert wird. Denkbar ist jedoch auch, dass die über die Antenne von dem Transponder empfangbaren Signale gedämpft oder reflektiert werden. Ferner kann die Störung dadurch erzielt werden, dass die Antenne gegenüber dem zugeordneten Kommunikationsschaltkreis durch die Annäherung des Störobjekts verstimmt wird, insbesondere eine Schwingkreischarakteristik verändert wird.

Das Störobjekt kann zum Beispiel eine metallische Platte, ein metallischer Stößel oder Zylinder oder ein sonstiger metallischer Körper sein. Das Störobjekt kann ein gegenüber dem Transponder bewegliches Bauteil der Vorrichtung selbst sein (Störbauteil). Vorteilhaft kann jedoch auch sein, wenn ein nicht von der überwachten Vorrichtung umfasstes Objekt, beispielsweise ein von einer zu überwachenden Greifvorrichtung zu greifendes Werkstück als Störobjekt dient.

Ein Transponder ist im vorliegenden Zusammenhang ein Kommunikationsgerät, welches dazu eingerichtet ist, eingehende Signale zu empfangen und ein Antwortsignal zu erzeugen. Die Signalübertragung umfasst daher insbesondere ein von der Basiseinrichtung zu dem Transponder übertragenes Anfragesignal und ein dadurch auslesbares Antwortsignal von dem Transponder zu der Basiseinrichtung. Das Antwortsignal kann z.B. in einer gezielten Modulation des eingehenden Signals bestehen oder durch ein insbesondere zeitversetzt reflektiertes Signal bereitgestellt werden. Der Transponder kann als passiver Transponder ausgebildet sein, welcher ohne zusätzliche Energieversorgung lediglich mittels des empfangenen Signals ein Antwortsignal erzeugt. Das Antwortsignal wird dann von der Energie des Anfragesignals gespeist. In diesem Fall kann eine Energieversorgung des Transponders mittels Verkabelung oder Batterie entfallen. Um diese Vorteile zu erzielen, kann der Transponder beispielsweise in der Art eines (insbesondere passiven) RFID-tags ausgebildet sein. Denkbar ist jedoch auch, andere drahtlose Signalübertragungstechniken wie zum Beispiel Zigbee oder Bluetooth zu verwenden.

Nach einem Aspekt der Erfindung betrifft die Störung der Signalübertragung das von dem Transponder zu empfangene Anfragesignal. Dieses wird insbesondere gedämpft oder sein Empfang über die Antenne unterbunden. Findet ein passiver Transponder Verwendung, welcher die Energie für das Antwortsignal aus der Energie des Anfragesignals bezieht, so wird durch eine Störung des Anfragesignals eine Aktivierung des passiven Transponders von vorneherein unterbunden. In diesem Fall kann beispielsweise ein passives RFID-tag kein Antwortsignal senden.

Vorteilhaft kann jedoch auch eine Ausgestaltung sein, bei welcher zwar der Empfang des Anfragesignals mittels der Antenne des Transponders möglich ist, jedoch das Antwortsignal des Transponders gestört wird. Diese Ausgestaltung erlaubt es, große Sendeleistungen für das Anfragesignal zu verwenden und so Fehler bei der Überwachung zu vermeiden. Die Sendeleistung kann dann z.B. derart groß gewählt werden, dass die Transponder auch bei angenähertem Störobjekt aktiviert werden, jedoch kein ausreichendes Antwortsignal übertragen werden kann. Schließlich kann auch eine Ausgestaltung vorteilhaft sein, bei der die Störung das Anfragesignal und das Antwortsignal erfasst.

Der Transponder kommuniziert mit einer Basiseinrichtung, zum Beispiel einem Lesegerät für als RFID-tag ausgebildete Transponder. Die Basiseinrichtung ist nicht notwendigerweise Bestandteil der zu überwachenden Vorrichtung. Sie kann zum Beispiel in einer zentralen Überwachungseinheit für die Vorrichtung oder für mehrere Vorrichtungen angeordnet sein. Denkbar ist jedoch auch, dass die Basiseinrichtung selbst Bestandteil der Vorrichtung ist.

Die erfindungsgemäße Idee zur Lösung der eingangs genannten Aufgabe wird auch durch eine Vorrichtung verwirklicht, mittels welcher das erfindungsgemäße Verfahren ausgeführt werden kann. Diese Vorrichtung ist derart ausgebildet, dass sie wenigstens einen ersten und einen zweiten Betriebszustand einnehmen kann. An der Vorrichtung ist ein Transponder mit einem Kommunikationsschaltkreis und einer Antenne zur drahtlosen Signalübertragung von und zu einer Basiseinrichtung angeordnet.

Dabei ist die Vorrichtung derart ausgebildet, dass der erste Betriebszustand mit einer beabstandeten Lage eines Störobjekts relativ zu der Antenne korrespondiert. Befindet sich die Vorrichtung in ihrem ersten Betriebszustand, nimmt das Störobjekt daher eine bebstandete Lage zu der Antenne ein. Entsprechend korrespondiert der zweite Betriebszustand mit einer angenäherten Lage des Störobjekts relativ zur Antenne. Der Transponder ist derart an der Vorrichtung angeordnet, dass die Signalübertragung zwischen Antenne und Basiseinrichtung durch das Störobjekt gestört ist, wenn sich das Störobjekt in seiner angenäherten Lage befindet. Die Signalübertragung ist durch das Störobjekt ungestört, wenn sich das Störobjekt in seiner beabstandeten Lage befindet.

Der Betriebszustand einer solchen Vorrichtung kann dadurch überwacht werden, dass ein Auftreten bzw. ein Entfallen einer Störung der Signalübertragung detektiert wird, wozu z.B. eine Basiseinrichtung zur Kommunikation mit dem Transponder verwendet werden kann.

Vorzugsweise weist die Vorrichtung ein gegenüber dem Transponder bewegliches Bauteil oder einen gegenüber dem Transponder beweglichen Abschnitt auf, wobei das Störobjekt an dem Bauteil oder dem Abschnitt angeordnet ist oder von dem Bauteil oder dem Abschnitt selbst gebildet wird. Das Störobjekt kann zum Beispiel ein an einem beweglichen Bauteil oder Abschnitt angeordnetes Metallplättchen umfassen. Wird dieses der Antenne angenähert, so wird die Signalübertragung gestört. Umgekehrt kann auch der Transponder an einem beweglichen Bauteil oder einem beweglichen Abschnitt der Vorrichtung angeordnet sein und relativ zu dem Störobjekt bewegbar sein. Auch können Transponder und Störobjekt jeweils an beweglichen Bauteilen der Vorrichtung angeordnet sein.

Die Vorrichtung ist vorzugsweise als Handhabungsvorrichtung für ein Werkstück ausgebildet, wobei die Handhabungsvorrichtung mittels mechanischen Drucks gegen das zu handhabende Werkstück oder mittels pneumatischen Druck oder Unterdruck von dem ersten Betriebszustand in den zweiten Betriebszustand überführt werden kann. Insbesondere kann das zu handhabende Werkstück das Störobjekt bilden. Der Transponder ist zum Beispiel an einem Abschnitt der Vorrichtung angeordnet, welcher zur Handhabung nahe an das Werkstück herangebracht wird und bei Freigabe von dem Werkstück beabstandet ist.

Die Vorrichtung ist insbesondere als Greif- oder Spannvorrichtung zur Fixierung eines Werkstückes ausgebildet, wobei z.B. zweite Betriebszustand einem gegriffenen bzw. fixierten Werkstück entspricht. Insbesondere ist die Vorrichtung ein Sauggreifer mit einem elastischen Saugkörper, welcher z.B. in der Art einer Saugerglocke ausgebildet ist. Der Transponder ist beispielsweise an der Saugerglocke angeordnet. Wird ein solcher Sauggreifer beispielsweise mechanisch gegen das Werkstück gedrückt, so nähert sich der Transponder dem als Störobjekt dienenden Werkstück an. Eine Annäherung des Transponders an das Werkstück kann auch dadurch erzielt werden, dass der von dem Saugkörper begrenzte Saugraum mit Unterdruck beaufschlagt wird und sich der Saugkörper dadurch verformt, typischerweise an das Werkstück anliegt.

Das Störobjekt kann aber auch von einem Abschnitt des Sauggreifers selbst gebildet werden oder daran angeordnet sein, welcher sich beim Greifen des Werkstücks dem Transponder nähert (oder alternativ sich beim Greifen von dem Transponder entfernt).

Die erfindungsgemäße Idee kann auch bei einer als Längenmessvorrichtung ausgebildeten Vorrichtung eingesetzt werden. Dabei entspricht der erste Betriebszustand einer ersten Messstellung und der zweite Betriebszustand einer zweiten Messstellung der Längenmessvorrichtung.

Eine weitere Verwirklichung der erfindungsgemäßen Idee betrifft einen Druckschalter bzw. einen Vakuumschalter. Dieser kann einen verlagerbaren Kolben umfassen, welcher einen Druckraum begrenzt, wobei der Kolben durch Beaufschlagung des Druckraums mit einem Überdruck bzw. einem Unterdruck zwischen wenigstens einer ersten Lage und einer zweiten Lage verlagerbar ist. Der Kolben ist beispielsweise durch ein Federmittel, beispielsweise Schraubenfeder oder elastische Membran, in z.B. der ersten Lage vorgespannt. Die erste Lage entspricht dann dem ersten Betriebszustand der Vorrichtung, die zweite Lage dem zweiten Betriebszustand. Der Transponder kann z.B. an der Vorrichtung derart angeordnet sein, dass der Kolben in seiner ersten Lage von dem Transponder beabstandet ist, und in seiner zweiten Lage dem Transponder angenähert ist. Das Störobjekt ist vorzugsweise an dem Kolben angeordnet bzw. wird von dem Kolben selbst gebildet.

Weitere Verwendungen der erfindungsgemäßen Idee betreffen eine Vorrichtung zur Positionsbestimmung. Verschiedene Positionen entsprechen dabei verschiedenen Betriebszuständen der Vorrichtung. Denkbar ist auch eine Kraftmessvorrichtung. Dabei wird ein bewegliches Bauteil gegen eine definierte Vorspannung ausgelenkt. Verschiedene Auslenkungspositionen entsprechen dann verschiedenen Betriebszuständen. Dies ermöglicht auch einen Einsatz als Vorrichtung zur Verschleißanzeige. Ein Federmittel kann beispielsweise Störobjekt und Transponder in einer einander angenäherten Lage vorspannen. Bei Verschleiß des Federmittels entfernen sich Störobjekt und Transponder voneinander und eine Störung der Signalübertragung entfällt.

Zur Lösung der eingangs gestellten Aufgabe wird außerdem ein System zur Überwachung des Betriebszustandes einer Vorrichtung gemäß dem Anspruch 8 vorgeschlagen. Dieses System kann eine zentrale Basiseinrichtung zur drahtlosen Signalübertragung zu und von den Transpondern zur Überwachung von einer oder auch von mehreren Vorrichtungen umfassen.

Eine besonders kostengünstige und energieeffiziente Überwachung lässt sich bei allen erfindungsgemäßen Lösungen dadurch erzielen, dass der Transponder als passiver RFID-tag mit einem RFID-Chip und einer mit diesem verbundenen Antenne zur Signalübertragung ausgebildet ist.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
- Figur 1: Skizzen zur Erläuterung der Signalübertragung;
- Figur 2: schematische Darstellung einer erfindungsgemäßen Sauggreifvorrichtung;
- Figur 3: schematische Darstellung einer weiteren erfindungsgemäßen Sauggreifvorrichtung;
- Figur 4: eine weitere erfindungsgemäße Vorrichtung;
- Figur 5: eine erfindungsgemäße Vorrichtung in Form eines Vakuumschalters;
- Figur 6: eine weitere erfindungsgemäße Sauggreifvorrichtung; und
- Figur 7: Skizze einer wiederum weiteren erfindungsgemäßen Sauggreifvorrichtung.

In der nachfolgenden Beschreibung sind identische oder einander entsprechende Bauteile mit denselben Bezugszeichen versehen.

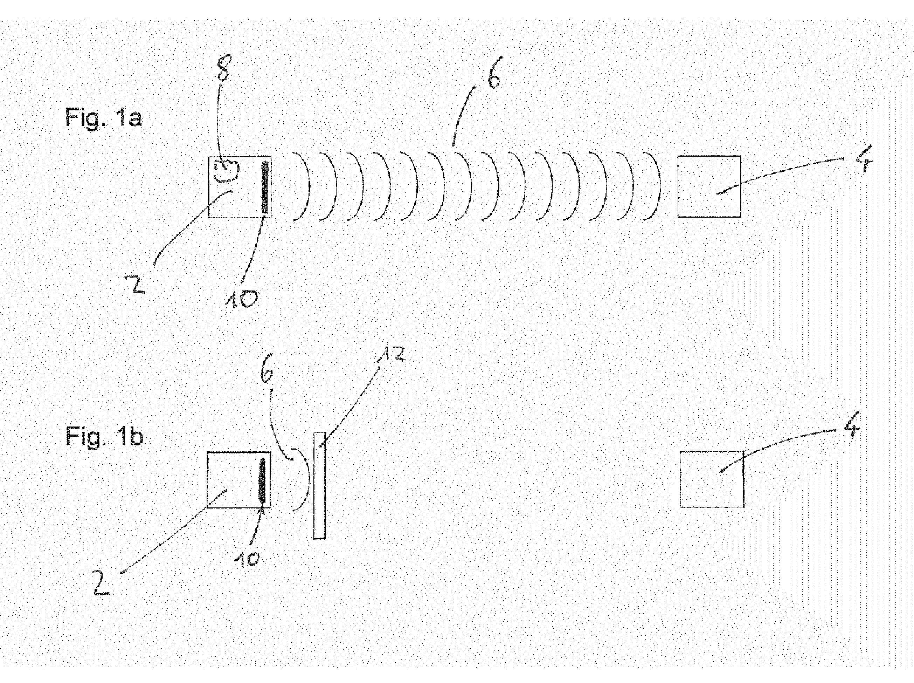

Zur Erläuterung der drahtlosen Signalübertragung zeigt die Figur 1a einen Transponder 2, welcher zur drahtlosen Signalübertragung von Signalen von und zu einer Basiseinrichtung 4 ausgebildet ist. In der Figur 1a ist ein elektromagnetisches Signal 6 von dem Transponder 2 zur Basiseinrichtung 4 angedeutet. Der Transponder 2 umfasst einen Kommunikationsschaltkreis 8 sowie eine Antenne 10, welche mit dem Kommunikationsschaltkreis 8 verbunden ist.

Im Falle der Figur 1b ist ein Störobjekt 12 derart in der Nähe der Antenne 10 angeordnet, dass die Übertragung des Signals 6 von dem Transponder 2 zur Basiseinrichtung 4 gestört ist.

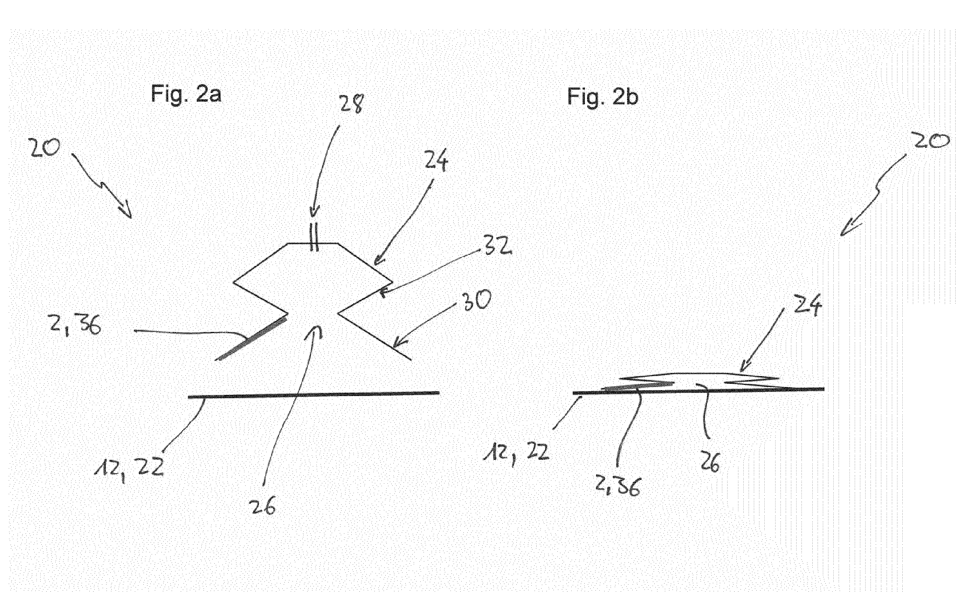

Die erfindungsgemäße Idee kann bei einer Vielzahl verschiedener Vorrichtungen eingesetzt werden, welche derart ausgebildet sind, dass das erfindungsgemäße Verfahren durchgeführt werden kann. Anhand der Figuren 2 bis 7 werden nachfolgend verschiedene Vorrichtungen als beispielhafte Konkretisierungen und Ausführungsbeispiele der erfinderischen Idee beschrieben.

In den Figuren 2a und 2b ist eine Sauggreifvorrichtung 20 dargestellt, welche zum Greifen eines insbesondere metallischen Werkstücks 22 dient. Das Werkstück 22 ist im dargestellten Beispiel ein sich eben erstreckendes, metallisches Blech. Die Saugvorrichtung 20 weist einen elastischen, glockenartigen Saugkörper 24 auf. Dieser begrenzt einen Saugraum 26, welcher über eine Unterdruckführung 28 evakuierbar ist, wenn der Saugkörper 24 zur Aufnahme des Werkstücks 22 an dieses anliegt.

Zur dichtenden Anlage an das Werkstück 22 weist der Saugkörper 24 einen Dichtlippenabschnitt 30 auf. An diesen schließt sich ein faltenbalgartig abgeschnürter Kompressionsabschnitt 32 des Saugkörpers 24 an.

Wird die Sauggreifvorrichtung 20 zum Greifen des Werkstücks 22 an dieses angedrückt, so kann der elastische Saugkörper 24 in Richtung des Werkstücks 22 komprimiert werden. Dabei nähert sich einerseits der Dichtlippenabschnitt 30 dem Werkstück 22 an, andererseits wird der Kompressionsabschnitt 32 in Richtung des Dichtlippenabschnitts 30 gedrückt und kommt gegebenenfalls an diesen zum Anliegen. Dies ist in der Figur 2b veranschaulicht.

Die Kompression des Saugkörpers 24 kann einerseits dadurch erfolgen, dass die gesamte Sauggreifvorrichtung 20 mechanisch auf das Werkstück 22 gedrückt wird. Denkbar ist jedoch auch, dass der Saugkörper 24 lediglich mit dem Dichtlippenabschnitt 30 an das Werkstück 22 angelegt wird, und daraufhin der nun dichtend abgegrenzte Saugraum 26 durch die Unterdruckführung 28 evakuiert wird.

Die Saugvorrichtung 20 weist demnach zwei ausgezeichnete Betriebszustände auf. In einem ersten Betriebszustand nimmt der Saugkörper 24 seine entspannte Lage ein, wie dies in Figur 2a dargestellt ist. Ein zweiter Betriebszustand wird durch den in Figur 2b dargestellten, komprimierten Zustand des Saugkörpers 24 definiert. Wie erläutert, ist dieser komprimierte Zustand (zweiter Betriebszustand) mit einer Anlage des zu greifenden Werkstücks 22 an den Saugkörper und mit einer Ausübung eines mechanischen Drucks auf die Sauggreifvorrichtung 20 und/oder eines Unterdrucks im Saugraum 26 verbunden.

Die Sauggreifvorrichtung 20 weist außerdem einen Transponder 2 auf, welcher in der Art eines an sich bekannten RFID-tags 36 ausgebildet ist. Das RFID-tag 36 ist an dem Dichtlippenabschnitt 30 des Saugkörpers 24 angeordnet, beispielsweise angeklebt.

Das metallische Werkstück 22 bildet ein Störobjekt 12 in dem zu Figur 1b erläuterten Sinne. Ist die Sauggreifvorrichtung 20 von dem zu greifenden Werkstück 22 beabstandet und befindet sich damit in ihrem ersten Betriebszustand, so wirkt das Werkstück 22 nicht störend auf eine Signalübertragung zwischen einer nicht näher dargestellten Basiseinrichtung und der Antenne des RFID-tags 36. Wird die Sauggreifvorrichtung 20 zum Greifen des Werkstücks 22 an dieses angedrückt und nimmt dabei ihren zweiten Betriebszustand ein (Figur 2b), so befindet sich das Werkstück 22 in einer dem RFID-tag 36 angenäherten Lage. Das als Störobjekt 12 wirkende Werkstück 22 stört dann eine Signalübertragung zwischen dem RFID-tag 36 und einer Basiseinrichtung.

Somit kann durch Detektion des Auftretens oder Entfallens einer Störung der Signalübertragung von und zu dem RFID-tag 36 zwischen dem ersten Betriebszustand (Figur 2a) und dem zweiten Betriebszustand (Figur 2b) unterschieden werden. Durch Auslesen des RFID-tags 36 kann somit auf einfache Weise festgestellt werden, ob ein Werkstück 22 mit der Sauggreifvorrichtung 20 gegriffen ist.

Bei der Sauggreifvorrichtung 20 ist insofern der Transponder 2 (RFID-tag 36) an einem beweglichen Abschnitt (Dichtlippenabschnitt 30) der Sauggreifvorrichtung 20 angeordnet. Das Störobjekt 12 ist nicht Bestandteil der Sauggreifvorrichtung 20, sondern wird von dem zu greifenden Werkstück 22 gebildet.

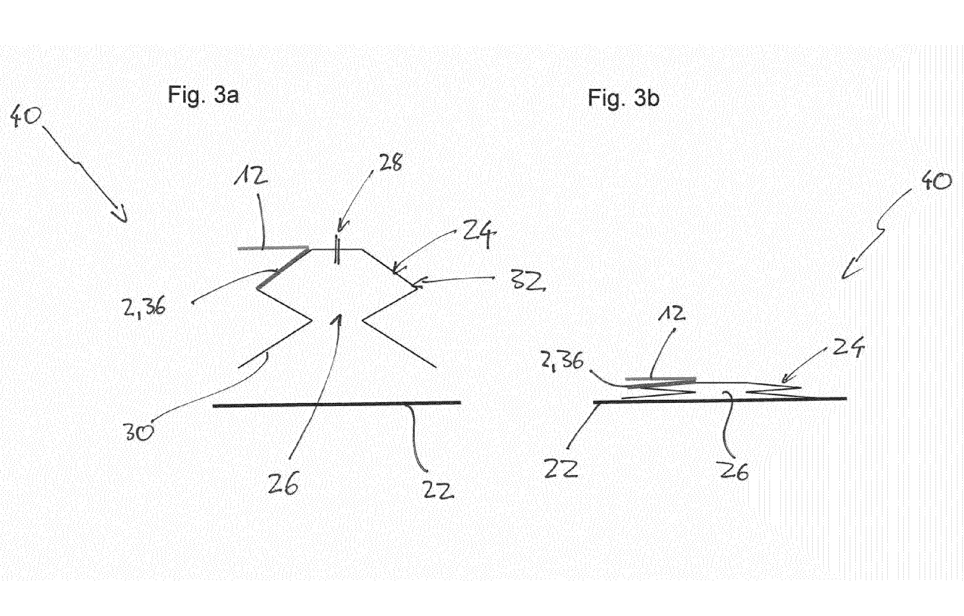

Eine hiervon abweichende Ausgestaltung ist in den Figuren 3a und 3b skizziert. Diese zeigen eine Sauggreifvorrichtung 40, deren Ausgestaltung im Wesentlichen der Sauggreifvorrichtung 20 entspricht. Die Sauggreifvorrichtung 40 hat insbesondere wiederum einen elastischen Saugkörper 24 mit einem Kompressionsabschnitt 32, welcher wiederum durch Druck (mechanisches Andrücken oder Evakuieren des Saugraums 26 durch die Unterdruckführung 28) komprimierbar ist.

Dabei entspricht der entspannte Zustand des Saugkörpers 24 wiederum dem ersten Betriebszustand der Sauggreifvorrichtung 40 (Figur 3a). Der zweite Betriebszustand entspricht wiederum dem komprimierten Zustand des Saugkörpers 24 und ist, wie bereits erläutert, mit einem aufgenommenen beziehungsweise gegriffenen Werkstück 22 verbunden (vergleiche Figur 3b).

Im Unterschied zu der Sauggreifvorrichtung 20 umfasst die Sauggreifvorrichtung 40 jedoch das Störobjekt 12. Dieses ist derart an der Sauggreifvorrichtung 40 (z.B. an einem nicht näher dargestellten Greifergrundteil) angeordnet, dass der Kompressionsabschnitt 32 des Saugkörpers 24 im ersten Betriebszustand der Sauggreifvorrichtung 40 (Figur 3a) von dem Störobjekt 12 beabstandet ist. Im zweiten Betriebszustand ist der Kompressionsabschnitt 32 aufgrund der Kompression des Saugkörpers 24 dem Störobjekt 12 angenähert.

Der wiederum als RFID-tag 36 ausgebildete Transponder 2 ist bei der Sauggreifvorrichtung 40 an dem Kompressionsabschnitt 32 angeordnet. Folglich ist der Transponder 2 im ersten Betriebszustand der Sauggreifvorrichtung 40 von dem Störobjekt 12 beabstandet und im zweiten Betriebszustand dem Störobjekt 12 angenähert. Dies erlaubt es wiederum, durch Detektion eines Auftretens oder Entfallens einer Störung der Signalübertragung zu dem Transponder 2 festzustellen, ob das Werkstück 22 mit der Sauggreifvorrichtung 40 gegriffen ist. Da das insbesondere metallische Störobjekt 12 an der Sauggreifvorrichtung 40 angeordnet ist, kann auch ein Greifen von Werkstücken 22 detektiert werden, welche selbst nicht als Störobjekt 12 wirken können (beispielsweise nicht metallische Werkstücke 22).

Im Unterschied zur Sauggreifvorrichtung 20 sind insofern sowohl Störobjekt 12 als auch Transponder 2 an der Sauggreifvorrichtung 40 derart angeordnet, dass sie relativ zueinander bewegbar sind und eine erste, mit dem ersten Betriebszustand korrespondierende, sowie eine zweite, mit dem zweiten Betriebszustand korrespondierende Lage zueinander einnehmen können.

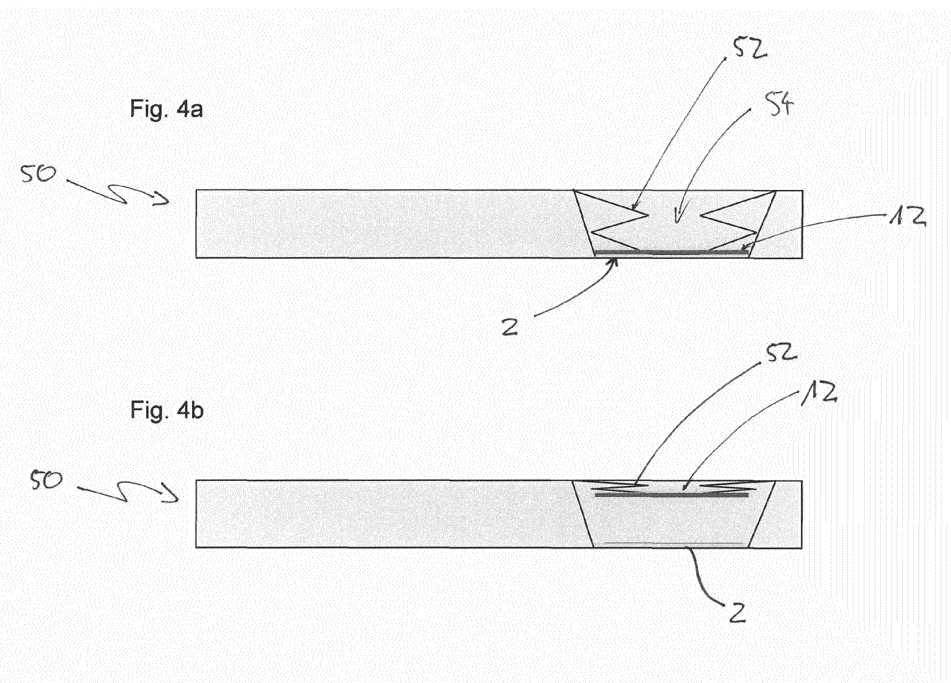

Bei der in Figuren 4a und 4b gezeigten Vorrichtung 50 ist das Störobjekt 12 verlagerbar gegenüber dem Transponder 2 an der Vorrichtung angeordnet. Zur Verlagerung des Störobjekts 12 ist eine Hubeinrichtung 52 vorgesehen. Diese kann beispielsweise einen Faltenbalg umfassen, welcher einen evakuierbaren Druckraum 54 begrenzt. Wird der Druckraum 54 evakuiert, so zieht sich der Faltenbalg zusammen, das heißt die Hubeinrichtung 52 verlagert das Störobjekt 12 in eine von dem Transponder 2 beabstandete Lage. Wird der Druckraum 54 mit Druck (zum Beispiel Umgebungsdruck) beaufschlagt, so befindet sich der Faltenbalg in seiner auseinandergezogenen Lage und das Störobjekt 12 liegt an dem Transponder 2 an. Dadurch werden zwei Betriebszustände der Vorrichtung 50 definiert, wie in den Figuren 4a und 4b dargestellt.

Die Vorrichtung 50 kann z.B. als Saugplatte ausgestaltet sein. Dabei steht der Druckraum 54 beispielsweise mit einer Saugöffnung der Saugplatte in Strömungsverbindung. Liegt an der Saugplatte kein anzusaugendes Werkstück an, so lässt sich in dem Druckraum 54 kein Vakuum aufbauen und das Störobjekt 12 liegt an dem Transponder 2 an. Es liegt daher der sogenannte zweite Betriebszustand in obigem Sinne vor. Dieser zeigt im Falle der Saugplatte an, dass kein anzusaugendes Werkstück vorhanden ist oder das kein Vakuum aufgebaut werden kann und insofern eine Funktionsstörung vorliegt. Liegt hingegen ein anzusaugendes Werkstück korrekt an der Saufplatte an, so kann in dem Druckraum 54 ein Unterdruck aufgebaut werden und das Störobjekt 12 wird von dem Transponder 2 entfernt. Der dann vorliegende erste Betriebszustand in obigem Sinne zeigt einen störungsfreien Betrieb der Saugplatte an.

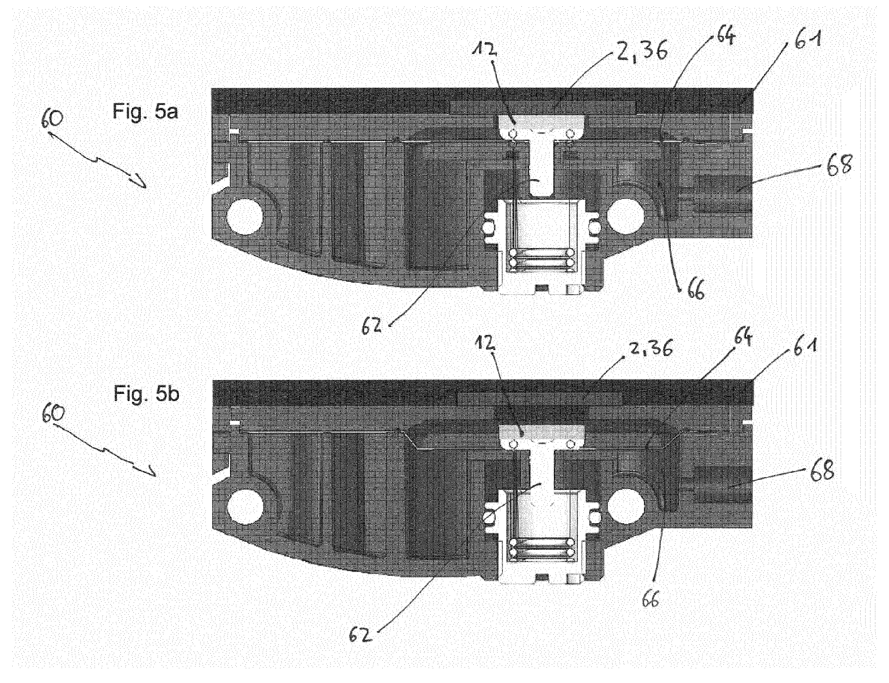

Die Figuren 5 und 5b zeigen die Verwirklichung der erfindungsgemäßen Idee in einem Vakuumschalter 60. Der Vakuumschalter 60 umfasst ein Gehäuse 61, in welcher ein Stößel 62 verlagerbar angeordnet ist. Der Stößel 62 weist das Störobjekt 12 auf beziehungsweise bildet dieses. Der Stößel 62 ist an einer elastischen Membran 64 angeordnet, welche einen Druckraum 66 begrenzt. Der Druckraum 66 ist mit einem Unterdruckanschluss 68 strömungs- und druckverbunden.

An beziehungsweise in dem Gehäuse 61 ist ferner ein Transponder 2 angeordnet, welcher wiederum als RFID-tag 36 ausgebildet sein kann. Wenn es sich um passives RFID-tag handelt, kann dieses beispielsweise in das Gehäuse 61 integriert, z.B. eingegossen sein, da für das passive RFID-tag keine separate Energieversorgung erforderlich ist.

Der Transponder 2 ist derart in dem Gehäuse 61 angeordnet, dass das Störobjekt 12 in einer dem Transponder 2 angenäherten Lage ist, wenn sich die elastische Membran 64 in ihrem entspannten Zustand befindet. Dies definiert einen sogenannten zweiten Betriebszustand in obigem Sinne und ist in der Figur 5a dargestellt.

Wird über den Unterdruckanschluss 68 an den Druckraum 66 ein ausreichender Unterdruck angelegt, so wird die den Druckraum 66 begrenzende elastische Membran 64 zur Verkleinerung des Volumens des Druckraums 66 verformt und damit das Störobjekt 12 von dem Transponder 2 wegbewegt. Dies definiert einen sogenannten ersten Betriebszustand der Vorrichtung 60 in obigem Sinne und ist in der Figur 5b dargestellt.

Der für den Übergang der Vorrichtung 60 von ihrem zweiten Betriebszustand (Figur 5a) in ihren ersten Betriebszustand (Figur 5b) erforderliche Unterdruck kann über die Elastizität der Membran 64 bestimmt werden. Die Vorrichtung 60 kann daher als Unterdruckschalter verwendet werden, welcher bei einem ausreichenden, am Unterdruckanschluss 68 anliegenden Unterdruck eine Signalübertragung von dem Transponder 2 zu einer nicht näher dargestellten Basiseinrichtung erlaubt. Das übertragende Signal kann dann z.B. als Schaltsignal dienen.

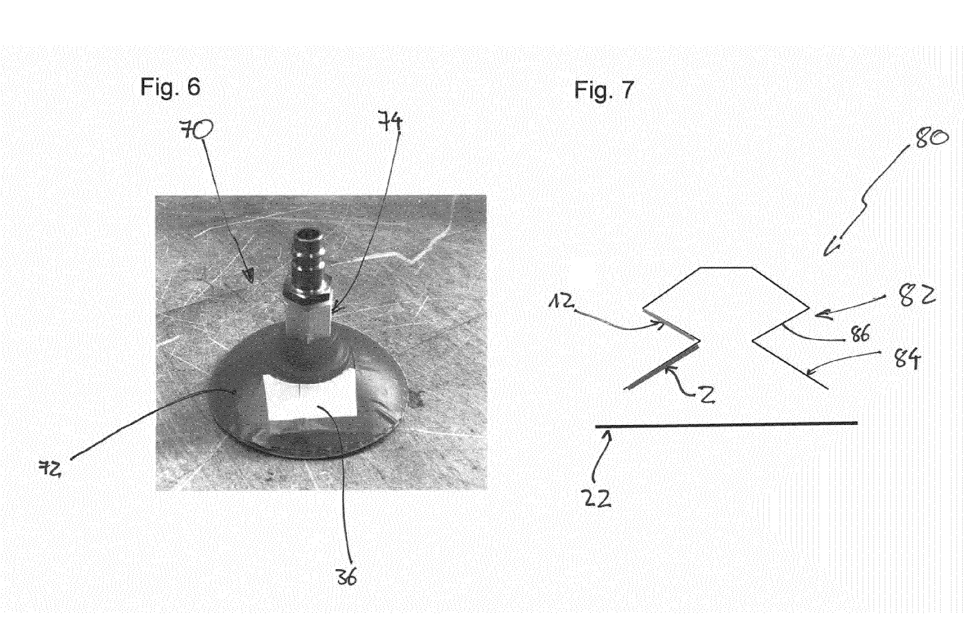

Die Figur 6 zeigt einen Sauggreifer 70 als eine besonders einfache Ausführungsform der erfindungsgemäßen Vorrichtung. Der Sauggreifer 70 weist eine elastische Saugglocke 72 auf, welche in bekannter Weise einen Saugraum begrenzt, der bei anliegendem Werkstück evakuierbar ist. An der Saugglocke 72 ist ein RFID-tag 36 angeklebt, beispielsweise an einer von dem Saugraum abgewandten Oberfläche der dünnen und elastischen Saugglocke 72. Die Saugglocke 72 mündet in einem starren Greifergrundteil 74. Die Figur 6 zeigt den Sauggreifer 70 in seinem ersten Betriebszustand. Wird der Sauggreifer 70 mit seiner elastischen Saugglocke 72 gegen ein insbesondere metallisches Werkstück gedrückt, so nähert sich aufgrund der elastischen Verformung der Saugglocke 72 das RFID-tag 36 dem zu greifenden Werkstück an. Dies definiert den zweiten Betriebszustand des Sauggreifers 70. Handelt es sich um ein metallisches Werkstück, so kann dieses in der oben erläuterten Art als Störobjekt dienen und eine Signalübertragung von oder zu dem RFID-tag 36 stören.

In der Figur 7 ist eine Sauggreifvorrichtung 80 skizziert, welche einen glockenartigen Saugkörper 82 ähnlich der Sauggreifvorrichtung 20 gemäß Figur 2a und 2b aufweist. Der elastische Saugkörper 82 weist wiederum einen Dichtlippenabschnitt 84 zur Anlage an das zu greifende Werkstück 22 auf. Der Dichtlippenabschnitt 84 schließt sich faltenbalgartig an einen Kompressionsabschnitt 86 an. Wird der Saugkörper 82 an das Werkstück 22 angedrückt, so nähert sich bei Kompression des Saugkörpers 82 der Kompressionsabschnitt 86 dem Dichtlippenabschnitt 84 an. Über die relative Lage von Kompressionsabschnitt 86 und Dichtlippenabschnitt 84 zueinander können daher ein erster Betriebszustand (beabstandete Lage) und ein zweiter Betriebszustand (komprimierte Lage) charakterisiert werden. Folglich kann die erfindungsgemäße Idee dadurch verwirklicht werden, dass an dem Dichtlippenabschnitt 84 ein Transponder 2 und an dem Kompressionsabschnitt 86 ein Störobjekt 12 angeordnet wird. Denkbar ist jedoch auch eine umgekehrte Auslegung, bei welcher an dem Dichtlippenabschnitt 84 ein Störobjekt 12, und an dem Kompressionsabschnitt 86 ein Transponder 2 angeordnet ist.

Der Transponder 2 und das Störobjekt 12 sind derart ausgelegt, dass im ersten Betriebszustand (beabstandete Lage) eine Signalübertragung von dem Transponder 2 zu einer nicht näher dargestellten Basiseinrichtung möglich ist. Im komprimierten Zustand kann die Signalübertragung von dem Störobjekt 12 gestört werden. Mit der Sauggreifvorrichtung 80 kann auch das Greifen eines Werkstücks 22 detektiert werden, welches selbst nicht als Störobjekt wirken kann.

## Patentansprüche

1. Verfahren zur Überwachung des Betriebszustandes einer Vorrichtung (20, 40, 50, 60, 70, 80), insbesondere einer Handhabungsvorrichtung,
wobei an der Vorrichtung ein Transponder (2, 36) mit einem Kommunikationsschaltkreis (8) und einer Antenne (10) zur drahtlosen Signalübertragung von und zu einer Basiseinrichtung (4) angeordnet ist, wobei das Verfahren die folgenden Schritte umfasst:
- Übergang der Vorrichtung (20, 40, 50, 60, 70, 80) zwischen einem ersten Betriebszustand und einem zweiten Betriebszustand, wobei der erste Betriebszustand mit einer beabstandeten Lage eines Störobjekts (12) relativ zu der Antenne (10) korrespondiert und der zweite Betriebszustand mit einer angenäherten Lage des Störobjekts (12) relativ zu der Antenne (10) korrespondiert,
- Störung der Signalübertragung zwischen Antenne (10) und Basiseinrichtung (4) durch das Störobjekt (12), wenn sich dieses in seiner angenäherten Lage befindet, wobei die Signalübertragung ungestört durch das Störobjekt (12) ist, wenn sich das Störobjekts (12) in seiner beabstandeten Lage befindet,
- Detektion des Auftretens oder Entfallens einer Störung der Signalübertragung zur Feststellung eines Übergangs zwischen den Betriebszuständen.

2. Verfahren nach Anspruch 1, **dadurch gekennzeichnet, dass** die Signalübertragung ein Anfragesignal von der Basiseinrichtung (4) zu dem Transponder (2) und ein dadurch auslösbares Antwortsignal (6) von dem Transponder (2) zu der Basiseinrichtung (4) umfasst, wobei die Störung der Signalübertragung das Anfragesignal betrifft.

3. Verfahren nach Anspruch 1, **dadurch gekennzeichnet, dass** die Signalübertragung ein Anfragesignal von der Basiseinrichtung (4) zu dem Transponder (2) und ein dadurch auslösbares Antwortsignal (6) von dem Transponder zu der Basiseinrichtung umfasst, wobei die Störung der Signalübertragung das Antwortsignal (6) betrifft.

4. Verfahren nach einem der vorhergehenden Ansprüche, **dadurch gekennzeichnet, dass** die Störung eine Signaldämpfung, eine Signalunterdrückung, eine Verringerung der Signalreichweite oder eine Verstimmung oder Modulation der Signalfrequenz umfasst.

5. Vorrichtung (20, 40, 50, 60, 70, 80) zur Durchführung des Verfahrens nach einem der Ansprüche 1 bis 4, welche wenigstens einen ersten und einen zweiten Betriebszustand einnehmen kann,
wobei die Vorrichtung (20, 40, 50, 60, 70, 80) einen Transponder (2, 36) mit einem Kommunikationsschaltkreis (8) und einer Antenne (10) zur drahtlosen Signalübertragung von und zu einer Basiseinrichtung (4) aufweist, **dadurch gekennzeichnet, dass** die Vorrichtung (20, 40, 50, 60, 70, 80) derart ausgebildet ist, dass der erste Betriebszustand mit einer beabstandeten Lage eines Störobjekts (12) relativ zu der Antenne (10) korrespondiert und der zweite Betriebszustand mit einer angenäherten Lage des Störobjekts (12) relativ zu der Antenne (10) korrespondiert,
wobei der Transponder (2, 36) derart an der Vorrichtung (20, 40, 50, 60, 70, 80) angeordnet ist und derart ausgebildet ist, dass die Signalübertragung zwischen Antenne (10) und Basiseinrichtung (4) störbar ist, wenn sich das Störobjekt (12) in seiner angenäherten Lage befindet, und dass die Signalübertragung ungestört durch das Störobjekt (12) ist, wenn sich das Störobjekt (12) in seiner beabstandeten Lage befindet.

6. Vorrichtung (50, 60) nach dem vorhergehenden Anspruch, **dadurch gekennzeichnet, dass** die Vorrichtung ein relativ zu dem Transponder (2, 36) bewegliches Bauteil (62) aufweist, welches das Störobjekt (12) umfasst oder dieses bildet.

7. Vorrichtung (20, 40, 70, 80) nach Anspruch 5 oder 6, **dadurch gekennzeichnet, dass** die Vorrichtung (20, 40, 70, 80) als Handhabungsvorrichtung für ein Werkstück (22) ausgebildet ist, wobei die Handhabungsvorrichtung (20, 40, 70, 80) mittels mechanischen Drucks gegen das zu handhabende Werkstück (22) oder mittels pneumatischen Druck oder Unterdruck von dem ersten Betriebszustand in den zweiten Betriebszustand gebracht werden kann.

8. System zur Überwachung des Betriebszustandes einer Vorrichtung (20, 40, 50, 60, 70, 80), umfassend
- eine Vorrichtung (20, 40, 50, 60, 70, 80), welche wenigstens einen ersten und einen zweiten Betriebszustand einnehmen kann,
- wenigstens einen an der Vorrichtung (20, 40, 50, 60, 70, 80) angeordneten Transponder (2, 36) mit einem Kommunikationsschaltkreis (8) und einer Antenne (10) zur drahtlosen Signalübertragung von und zu einer Basiseinrichtung (4),
- ein Störobjekt (12), welches eine beabstandete und eine angenäherte Lage relativ zu der Antenne (10) des Transponders (2, 36) einnehmen kann,
wobei die Vorrichtung (20, 40, 50, 60, 70, 80) derart ausgebildet ist, dass die beabstandete Lage des Störobjekts (12) mit dem ersten Betriebszustand korrespondiert und die angenäherte Lage des Störobjekts (12) mit dem zweiten Betriebszustand korresponidert, wobei der Transponder (2, 36) und das Störobjekt (12) derart ausgebildet sind, dass die Signalübertragung zwischen Antenne (10) und Basiseinrichtung (4) gestört ist, wenn sich das Störobjekt (12) in seiner angenäherten Lage befindet, und dass die Signalübertragung ungestört durch das Störobjekt (12) ist, wenn sich das Störobjekt (12) in seiner beabstandeten Lage befindet.

9. System nach dem vorhergehenden Anspruch, umfassend ferner eine Basiseinrichtung (4) zur drahtlosen Signalübertragung von und zu dem Transponder (2, 36).

10. System nach Anspruch 8 oder 9, **dadurch gekennzeichnet, dass** der Transponder (2) als passiver RFID-tag (36) mit einem RFID-chip (8) und einer mit diesem verbundenen Antenne (10) ausgebildet ist.

## Claims

1. A method for monitoring the operating state of a device (20, 40, 50, 60, 70, 80), in particular a handling device,
wherein on the device a transponder (2, 36) with a communication circuit (8) and an antenna (10) for the wireless transmission of signals to and from a base device (4) are arranged, wherein the method comprises the following steps:
- transition of the device (20, 40, 50, 60, 70, 80) between a first operating state and a second operating state, wherein the first operating state corresponds to a spaced position of an interfering object (12) in relation to the antenna (10) and the second operating state corresponds to a converged position of the interfering object (12) in relation to the antenna (10),
- interference of the signal transmission between the antenna (10) and the base device (4) by the interfering object (12), when it is in its converged position, wherein the signal transmission is not interfered with by the interfering object (12), when the interfering object (12) is in its spaced position,
- detection of the occurrence or lack of interference with the signal transmission for determination of a transition between the operating states.

2. The method as set forth in Claim 1, **characterized in that** the signal transmission includes a request signal from the base device (4) to the transponder (2) and a reply signal (6), being triggerable thereby, from the transponder (2) to the base device (4), wherein the interference with the signal transmission relates to the request signal.

3. The method as set forth in Claim 1, **characterized in that** the signal transmission includes a request signal from the base device (4) to the transponder (2) and a reply signal (6), being triggerable thereby, from the transponder (2) to the base device (4), wherein the interference with the signal transmission relates to the reply signal (6).

4. The method in accordance with any of the proceeding claims, wherein the interference includes signal attenuation, signal suppression, a decrease in the signal range or a detuning or modulation of the signal frequency.

5. A device (20, 40, 50, 60, 70, 80) for carrying out the method in accordance with any one of Claims 1 through 4, which can occupy at least a first and a second operating state,
wherein the device (20, 40, 50, 60, 70, 80) has a transponder (2, 36) with a communication circuit (8) and an antenna (10) for wireless signal transmission from and to a base device (4), **characterized in that** the device (20, 40, 50, 60, 70, 80) is designed such that the first operating state corresponds to a spaced position of an interfering object (12) in relation to the antenna (10) and the second operating state corresponds to a converged position of the interfering object (12) in relation to the antenna (10),
wherein the transponder (2) is arranged on the device (20, 40, 50, 60, 70, 80) and designed such that the signal transmission between the antenna (10) and the base device (4) is interferable with, when the interfering object (12) is in its converged position, and that the signal transmission is not interfered with by the interfering object (12), when said interfering object (12) is in its spaced position.

6. The device (50, 60) in accordance with any of the proceeding claims, **characterized in that** the device has a component (62) being movable relative to the transponder (2), which includes or constitutes the interfering object (12).

7. The device (20, 40, 70, 80) as set forth in Claim 5 or 6, **characterized in that** the device (20, 40, 70, 80) is designed as a handling device for a work piece (22), wherein the handling device (20, 40, 70, 80) can be brought against the work piece (22) to be handled by mechanical pressure or can be brought from the first operating state to the second operating state by pneumatic pressure or negative pressure.

8. A system for monitoring the operating state of a device (20, 40, 50, 60, 70, 80), including
- a device (20, 40, 50, 60, 70, 80) which can occupy at least a first and a second operating state,
- at least one transponder (2, 36) arranged on the device (20, 40, 50, 60, 70, 80) with a communication circuit (8) and an antenna (10) for wireless signal transmission from and to a base device (4),
- an interfering object (12) which can occupy a spaced and a converged position relative to the antenna (10) of the transponder (2, 36),
wherein the device (20, 40, 50, 60, 70, 80) is designed such that the spaced position of the interfering object (12) corresponds to the first operating state and the converged position of the interfering object (12) corresponds to the second operating state,
wherein the transponder (2, 36) and the interfering object (12) are designed such that the signal transmission between the antenna (10) and the base device (4) is interfered with, when the interfering object (12) is in its converged position, and that the signal transmission is not interfered with by the interfering object (12), when the interfering object (12) is in its spaced position.

9. The system as set forth in the proceeding claim, further including a base device (4) for wireless signal transmission from and to the transponder (2, 36).

10. The system as set forth in Claim 8 or 9, **characterized in that** the transponder (2) is designed as a passive RFID tag (36) with an RFID chip (8) and an antenna (10) connected to said transponder (2).

## Revendications

1. Procédé de surveillance de l'état de fonctionnement d'un dispositif (20, 40, 50, 60, 70, 80), en particulier d'un dispositif de manipulation,
dans lequel un transpondeur (2, 36) ayant un circuit de communication (8) et une antenne (10) pour la transmission de signaux sans fil depuis et vers une installation de base (4) est agencé sur le dispositif, le procédé comprenant les étapes suivantes:
- transition du dispositif (20, 40, 50, 60, 70, 80) entre un premier état de fonctionnement et un deuxième état de fonctionnement, le premier état de fonctionnement correspondant à une position éloignée d'un objet perturbateur (12) par rapport à l'antenne (10) et le deuxième état de fonctionnement correspondant à une position proche de l'objet perturbateur (12) par rapport à l'antenne (10),
- perturbation de la transmission de signaux entre l'antenne (10) et l'installation de base (4) par l'objet perturbateur (12) lorsque celui-ci se trouve dans sa position proche, la transmission de signaux s'effectuant sans perturbation du fait de l'objet perturbateur (12) lorsque l'objet perturbateur (12) se trouve dans sa position éloignée,
- détection de la survenue ou de la disparition d'une perturbation de la transmission de signaux en vue de la constatation d'une transition entre les états de fonctionnement.

2. Procédé selon la revendication 1, **caractérisé en ce que** la transmission de signaux comprend un signal d'interrogation depuis l'installation de base (4) vers le transpondeur (2) et un signal de réponse (6) pouvant être déclenché par celui-ci depuis le transpondeur (2) vers l'installation de base (4), la perturbation de la transmission de signaux affectant le signal d'interrogation.

3. Procédé selon la revendication 1, **caractérisé en ce que** la transmission de signaux comprend un signal d'interrogation depuis l'installation de base (4) vers le transpondeur (2) et un signal de réponse (6) pouvant être déclenché par celui-ci depuis le transpondeur (2) vers l'installation de base, la perturbation de la transmission de signaux affectant le signal de réponse (6).

4. Procédé selon l'une des revendications précédentes, **caractérisé en ce que** la perturbation comprend une atténuation du signal, un verrouillage du signal, une diminution de la portée du signal ou un désaccord ou une modulation de la fréquence du signal.

5. Dispositif (20, 40, 50, 60, 70, 80) destiné à l'exécution du procédé selon l'une des revendications 1 à 4, qui peut se trouver au moins dans un premier et un deuxième état de fonctionnement,
le dispositif (20, 40, 50, 60, 70, 80) présentant un transpondeur (2, 36) ayant un circuit de communication (8) et une antenne (10) pour la transmission de signaux sans fil depuis et vers une installation de base (4), **caractérisé en ce que** le dispositif (20, 40, 50, 60, 70, 80) est réalisé de telle sorte que le premier état de fonctionnement correspond à une position éloignée d'un objet perturbateur (12) par rapport à l'antenne (10) et le deuxième état de fonctionnement correspond à une position proche de l'objet perturbateur (12) par rapport à l'antenne (10),
le transpondeur (2, 36) étant agencé de telle sorte sur le dispositif (20, 40, 50, 60, 70, 80) et étant réalisé de telle sorte que la transmission de signaux entre l'antenne (10) et l'installation de base (4) peut être perturbée lorsque l'objet perturbateur (12) se trouve dans sa position proche et que la transmission de signaux n'est pas perturbée par l'objet perturbateur (12) lorsque l'objet perturbateur (12) se trouve dans sa position éloignée.

6. Dispositif (50, 60) selon la revendication précédente, **caractérisé en ce que** le dispositif présente un composant (62) mobile par rapport au transpondeur (2, 36) qui comprend l'objet perturbateur (12) ou constitue cet objet.

7. Dispositif (20, 40, 70, 80) selon la revendication 5 ou 6, **caractérisé en ce que** le dispositif (20, 40, 70, 80) est réalisé en tant que dispositif de manipulation pour un outil (22), le dispositif de manipulation (20, 40, 70, 80) pouvant être amené du premier état de fonctionnement au deuxième état de fonctionnement au moyen d'une pression mécanique exercée contre l'outil (22) à manipuler ou au moyen d'une pression ou d'une dépression pneumatique.

8. Système de surveillance de l'état de fonctionnement d'un dispositif (20, 40, 50, 60, 70, 80), comprenant:
- un dispositif (20, 40, 50, 60, 70, 80) qui peut se trouver au moins dans un premier et un deuxième état de fonctionnement,
- au moins un transpondeur (2, 36) agencé sur le dispositif (20, 40, 50, 60, 70, 80), qui comprend un circuit de communication (8) et une antenne (10) pour la transmission de signaux sans fil depuis et vers une installation de base (4),
- un objet perturbateur (12) qui peut se trouver dans une position éloignée et une position proche par rapport à l'antenne (10) du transpondeur (2, 36),
le dispositif (20, 40, 50, 60, 70, 80) étant réalisé de telle sorte que la position éloignée de l'objet perturbateur (12) correspond au premier état de fonctionnement et la position proche de l'objet perturbateur (12) correspond au deuxième état de fonctionnement,
le transpondeur (2, 36) et l'objet perturbateur (12) étant réalisés de telle sorte que la transmission de signaux entre l'antenne (10) et l'installation de base (4) est perturbée lorsque l'objet perturbateur (12) se trouve dans sa position proche et que la transmission de signaux n'est pas perturbée par l'objet perturbateur (12) lorsque l'objet perturbateur (12) se trouve dans sa position éloignée.

9. Système selon la revendication précédente, comprenant en outre une installation de base (4) pour la transmission de signaux sans fil depuis et vers le transpondeur (2, 36).

10. Système selon la revendication 8 ou 9, **caractérisé en ce que** le transpondeur (2) est réalisé en tant qu'étiquette RFID (36) avec une puce RFID (8) et une antenne (10) reliée à celle-ci.
